(19) Europäisches Patentamt
European Patent Office
Office européen des brevets

(11) **EP 4 513 791 A1**

(12) **EUROPEAN PATENT APPLICATION**
published in accordance with Art. 153(4) EPC

(43) Date of publication:
**26.02.2025 Bulletin 2025/09**

(21) Application number: **23810894.8**

(22) Date of filing: **16.05.2023**

(51) International Patent Classification (IPC):
*H04J 3/06* (2006.01)

(52) Cooperative Patent Classification (CPC):
**H04J 3/06**

(86) International application number:
**PCT/CN2023/094485**

(87) International publication number:
**WO 2023/226821 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.05.2022 CN 202210569266**

(71) Applicant: **Huawei Technologies Co., Ltd.
Shenzhen, Guangdong 518129 (CN)**

(72) Inventors:
• WANG, Rui
  Shenzhen, Guangdong 518129 (CN)
• GAO, Chenyu
  Shenzhen, Guangdong 518129 (CN)

(74) Representative: **Pfenning, Meinig & Partner mbB
Patent- und Rechtsanwälte
Theresienhöhe 11a
80339 München (DE)**

(54) **CLOCK SYNCHRONIZATION METHOD AND APPARATUS, AND SERIAL NUMBER GENERATION METHOD AND APPARATUS**

(57)     This application discloses a clock synchronization method and apparatus, and an electronic device in the communication field, to improve accuracy of time synchronized from a second device to a first device. The clock synchronization method includes: The first device receives a first time interval of the second device, and updates local time of the first device based on a first moment, the local time of the first device, a second moment, and the first time interval, where the second moment is a moment at which the first device receives the first time interval. Updating the local time of the first device based on the first time interval may avoid accuracy reduction caused by directly updating the local time of the first device based on local time of the second device. At the same time, when clocks of the first device and the second device are synchronized, the first device only needs to receive a message that is of a local time interval of the second device and that is sent by the second device, so that time-frequency resource overheads are reduced.

[FIG. 6]

**Description**

This application claims priority to Chinese Patent Application No. 202210569266.2, filed with the China National Intellectual Property Administration on May 24, 2022 and entitled "CLOCK SYNCHRONIZATION METHOD AND APPARATUS, AND SEQUENCE NUMBER GENERATION METHOD", which is incorporated herein by reference in its entirety.

TECHNICAL FIELD

This application relates to the field of communication technologies, and in particular, to a clock synchronization method and apparatus, and a sequence number generation method.

BACKGROUND

In a computer system, each device maintains an independent clock crystal oscillator. Timing accuracy of each clock crystal oscillator varies when factors such as a temperature and a voltage change. Therefore, clock synchronization needs to be performed between devices, so that the devices have a unified time line. For example, a clock server is a computer network device, and is usually configured to obtain actual time from a clock source device, and then transmit time information to another device that needs to perform clock synchronization, for example, a database server, a terminal, or a smart home device. In other words, a clock needs to be synchronized at least twice during clock synchronization from the clock source device to the another device that needs to perform clock synchronization. Compared with the clock source device, accuracy of the clock synchronized from the clock server to the another device that needs to perform clock synchronization becomes lower.

SUMMARY

This application aims to provide a clock synchronization method and apparatus, and a sequence number generation method, to improve accuracy of time synchronized from a second device to a first device.
According to a first aspect, a clock synchronization method is provided, applied to a first device, including:
The first device sends a detection message to a second device, where the detection message is used to request a first time interval, and the first time interval indicates a time range in which local time of the second device is located;

the first device receives the first time interval; and
the first device updates local time of the first device based on a first moment, the local time of the first device, a second moment, and the first time interval, where the first moment is a moment at which the first device sends the detection message to the second device, and the second moment is a moment at which the first device receives the first time interval.

In this way, the first device directly obtains a local clock interval of the second device from the second device, and then updates the local time of the first device based on the moment at which the irstsecond device receives the local clock interval, the local time of the first device, and the local clock interval. Because time accuracy is reduced when the second device updates the local time, in this clock synchronization method, the local time of the first device is not directly updated based on the local time of the second device, so that accuracy of a clock synchronized to the first device is improved. In addition, when clocks of the first device and the second device are synchronized, the first device only needs to receive a message that is of a local time interval of the second device and that is sent by the second device, so that time-frequency resource overheads are reduced.
In a possible implementation, the first device sends a plurality of detection messages to one or more second devices; the first device receives a plurality of first time intervals; and the first device updates the local time of the first device based on a plurality of first moments, the local time of the first device, a plurality of second moments, and the plurality of first time intervals. In this way, the plurality of first time intervals are obtained based on the plurality of detection messages, and accuracy of clock synchronization is improved by jointly referring to the plurality of first time intervals.
In a possible implementation, that the first device updates the local time of the first device based on a plurality of first moments, the local time of the first device, a plurality of second moments, and the plurality of first time intervals includes: The first device obtains a second time interval based on the plurality of first moments, the local time of the first device, the plurality of second moments, and the plurality of first time intervals, where the second time interval is a time range in which the local time of the first device is located; and the first device updates the local time of the first device based on the second time interval, where updated local time of the first device is a moment in the second time interval. Therefore, the time range in which the local time of the first device may be located is determined based on the plurality of first time intervals, and then the local time of the first device is updated to a moment in the time range, so that accuracy of clock synchronization is improved.

In a possible implementation, that the first device obtains a second time interval based on the plurality of first moments, the local time of the first device, the plurality of second moments, and the plurality of first time intervals includes: The first device obtains a plurality of third time intervals based on the plurality of first moments, the local time of the first device, the plurality of second moments, and the plurality of first time intervals, where different third time intervals are trusted time intervals obtained by the first device based on different first time intervals; and the first device performs an operation on the plurality of third time intervals to obtain the second time interval, where the second time interval is an intersection of at least two third time intervals.

In a possible implementation, the second time interval is obtained by the first device by performing an operation on the plurality of third time intervals according to a Marzullo algorithm.

In a possible implementation, suprema of the plurality of third time intervals are obtained based on the local time of the first device, the plurality of first moments, and suprema of the plurality of first time intervals; and infima of the plurality of third time intervals are obtained based on the local time of the first device, the plurality of first moments, and infima of the plurality of first time intervals.

In a possible implementation, an operating system is installed on the first device, the operating system of the first device is configured to run a first instance, and the second time interval is stored in storage space corresponding to the first instance. When time needs to be synchronized, time of a physical network interface card does not need to be accessed, and a backend, for example, a database, does not need to be accessed. This saves network overheads, saves intranet bandwidth, and reduces a response delay.

In a possible implementation, the operating system of the first device is further configured to run a second instance, and the method further includes:

The second instance obtains the second time interval stored in the storage space corresponding to the first instance; and

the second instance generates a transaction consistency sequence number based on the second time interval or the updated local time of the first device.

In a possible implementation, the transaction consistency sequence number is generated based on a supremum of the second time interval.

In a possible implementation, the first device is a database server, and the second device is a time server.

In a possible implementation, the local clock interval of the second device is obtained based on the local time of the second device and a plurality of groups of second clock data. The second clock data is obtained based on clock synchronization between a third device and the second device. The second clock data includes: a moment at which the third device sends a synchronization message to the second device, a moment at which the second device receives the synchronization message, a moment at which the second device sends a delay request to the third device, a moment at which the third device receives the delay request, and the local time of the second device.

In a possible implementation, when the first device performs clock synchronization with the second device, the second device performs clock synchronization with a clock source device, and the third device is a master clock device. The clock source device may include a GPS Receiver, configured to communicate with a satellite, to obtain a local clock interval of a satellite clock source. The clock source device may alternatively include one or more atomic clocks, to avoid that an obtained clock interval of the satellite clock source is inaccurate when a GPS signal is interfered. The clock source device may alternatively include a GPS receiver and an atomic clock. When a GPS signal is interfered, the clock source device communicates with the second device via the atomic clock.

In a possible implementation, the clock source devices may be a plurality of clock source devices that have a master-slave relationship. In a possible implementation, there may be a plurality of clock source devices, and one or more clock source devices may be separately deployed in different clock domains. Certainly, a plurality of clock source devices may alternatively be deployed in one clock domain.

In a possible implementation, the first device is a smart home device, the second device is a mobile terminal, and the third device is a clock server or a base station.

In a possible implementation, that the first device sends a detection message to the second device a plurality of times refers to that the first device sends a detection message to one second device a plurality of times, or the first device sends a detection message to a plurality of second devices one or more times.

In a possible implementation, the transaction consistency sequence number is generated based on a supremum of a current clock interval (the second time interval) of the first device, and the method further includes: A first process sleeps when receiving a time fetch request; and

the first process sends the current clock interval of the first device to a second process after sleeping for preset duration.

In a possible implementation, the preset duration is a difference between the supremum and an infimum of the current clock interval of the first device. In this way, it can be ensured that when the supremum of the current clock interval of the database server passes, a transaction consistency sequence number obtained next time is greater than a current transaction consistency sequence number. It can be ensured that the transaction consistency sequence number provided by the database server does not decrease monotonically, and the transaction consistency sequence number increases progressively. Consistency of transaction consistency sequence numbers is ensured.

According to a second aspect, a clock synchronization method is provided, applied to a first device, including: The first device receives a first time interval, where the first time interval indicates a time range in which local time of a second device is located; and the first device updates local time of the first device based on the local time of the first device, a second moment, and the first time interval, where the second moment is a moment at which the first device receives the first time interval.

Optionally, the first device receives a plurality of first time intervals; and the first device updates the local time of the first device based on the local time of the first device, a plurality of second moments, and the plurality of first time intervals.

Optionally, that the first device updates the local time of the first device based on the local time of the first device, a plurality of second moments, and the plurality of first time intervals includes: The first device obtains a plurality of third time intervals based on the local time of the first device, the plurality of second moments, and the plurality of first time intervals, where different third time intervals are trusted time intervals obtained by the first device based on different first time intervals; the first device performs an operation on the plurality of third time intervals to obtain a second time interval, where the second time interval is an intersection of at least two third time intervals, and the second time interval is a time range in which the local time of the first device is located; and the first device updates the local time of the first device based on the second time interval, where updated local time of the first device is a moment in the second time interval.

According to a third aspect, a clock synchronization apparatus is provided. The apparatus has a function of implementing the clock synchronization method according to any one of the foregoing aspects and any one of the possible implementations of the foregoing aspects. The function may be implemented by hardware, or may be implemented by hardware executing corresponding software. The hardware or the software includes one or more modules corresponding to the function.

According to a fourth aspect, an electronic device is provided, including: a processor; and a memory configured to store instructions executable by the processor, where the processor is configured to perform the clock synchronization method according to any one of the foregoing aspects and any one of the possible implementations of the foregoing aspects.

According to a fifth aspect, a computer-readable storage medium is provided, where the computer-readable storage medium stores computer instructions, and when the computer instructions are executed, the clock synchronization method according to any one of the foregoing aspects and any one of the possible implementations of the foregoing aspects is implemented.

According to a sixth aspect, a database server is provided, including the clock synchronization apparatus according to the third aspect.

BRIEF DESCRIPTION OF DRAWINGS

To describe the technical solutions in embodiments of this application or in the conventional technology more clearly, the following briefly describes the accompanying drawings for describing embodiments or the conventional technology.

FIG. 1 is a diagram of a clock synchronization method in the conventional technology according to this application;
FIG. 2 is a signaling diagram of a clock synchronization method in the conventional technology according to this application;
FIG. 3 is a diagram of a network architecture of clock synchronization according to an embodiment of this application;
FIG. 4 is a signaling diagram of a clock synchronization method according to an embodiment of this application;
FIG. 5 is a signaling diagram of a clock synchronization method according to another embodiment of this application;
FIG. 6 is a signaling diagram of a clock synchronization method according to still another embodiment of this application;
FIG. 7 is a flowchart of a clock synchronization method according to an embodiment of this application;
FIG. 8 is a flowchart of a clock synchronization method according to another embodiment of this application;
FIG. 9 is a diagram of obtaining a current clock interval of a database server according to an embodiment of this application;
FIG. 10 is a diagram of obtaining a current clock interval of a database server according to another embodiment of this application;
FIG. 11 is a diagram of obtaining a current clock interval of a database server according to still another embodiment of this application;
FIG. 12 is a signaling diagram of a clock synchronization method according to an embodiment of this application;

FIG. 13 is a diagram of a clock synchronization apparatus according to an embodiment of this application; and
FIG. 14 is a diagram of a clock synchronization apparatus according to another embodiment of this application.

DESCRIPTION OF EMBODIMENTS

The following describes the technical solutions in embodiments of this application with reference to the accompanying drawings in embodiments of this application. A specific operation method in a method embodiment may also be applied to an apparatus embodiment or a system embodiment. In the descriptions of this application, unless otherwise specified, a plurality of means two or more than two. Terms such as "first" and "second" in the specification do not constitute a limitation on a specific quantity and a sequence relationship, but are merely for ease of differentiation and description.

In descriptions of this specification, a description of a reference term "an embodiment", "one embodiment", "an implementation", and the like means that a specific feature, structure, material, or characteristic that is described with reference to the embodiment or the implementation is included in at least one embodiment or example of this application. In this specification, example descriptions of the foregoing terms do not necessarily refer to a same implementation or a same example. In addition, the described specific features, approach, or characteristics may be combined in an appropriate manner in any one or more of embodiments or implementations.

An architecture and a service scenario described in this application are intended to describe the technical solutions of this application more clearly, and do not constitute any limitation to the technical solutions provided in this application. With evolution of a network architecture and emergence of a new service scenario, the technical solutions provided in this application are also applicable to similar technical problems.

A clock source device can function as a master clock to provide a timing service for a slave clock. The clock source device may include a GPS Receiver, configured to communicate with a satellite, to obtain a local clock interval of a satellite clock source. The clock source device may alternatively include one or more atomic clocks, to avoid that an obtained clock interval of the satellite clock source is inaccurate when a GPS signal is interfered. The clock source device may alternatively include a GPS receiver and an atomic clock. When a GPS signal is interfered, the clock source device communicates with a clock server via the atomic clock. For example, the clock source device may provide a timing service for the clock server.

The clock server, also called a time server, is a computer network device. The clock server obtains actual time from a reference clock and transmits time information to a user through a computer network. For example, a clock referenced by the time server may be provided from another time server, a connected atomic clock, or a radio clock. The clock server may provide a timing service for a terminal or a database server.

A process (Process) may be an activity performed regarding a data set by a program in a computer, is a base unit for performing resource allocation and scheduling by the system, and is a structural basis of an operating system. The process may be a basic execution entity of a program. The program is a description of an instruction, data, and an organizational form thereof. The process is a program entity. The process may be a basic unit dynamically executed by an operating system, and the process may alternatively be a basic allocation unit.

A detection message is a detection packet message. In this application, the detection message is used to request a local clock interval of the clock server.

A response message is a packet message. In this application, the response message indicates the local clock interval of the clock server.

A clock interval is also referred to as a time interval. For example, a first time interval indicates a time range in which local time of a second device is located, and is a time interval used to update the local time of the second device. For example, a second time interval is a time range in which local time of a first device is located, and is a time interval used to update the local time of the first device. Herein, the second device may be a clock server. The first time interval is a time interval used to update local time of the clock server, and the first time interval is obtained through interaction between the clock server and the clock source device according to an NTP protocol or a PTP protocol.

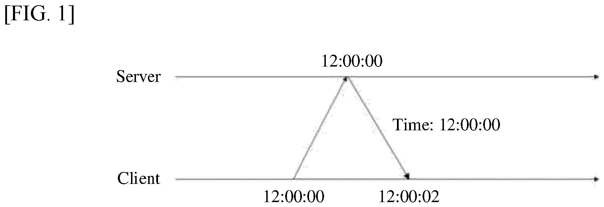

Refer to FIG. 1. FIG. 1 is a diagram of a network clock synchronization method. A client initiates a query request at 12:00:00, and receives a message from a server two seconds later, where returned time is also 12:00:00. In this case, it does not mean that a local clock is accurate because it takes time to send a message to the server. The local clock is earlier than the server clock, but a time offset is unclear. It can be determined that duration from a moment at which the local device sends the message to a moment at which the local device receives the message is 2 seconds. However, duration from the moment at which the local device sends the message to a moment at which the server receives the message and duration from a moment at which the server returns the message to the moment at which the local device receives the message are unclear. When the time is adjusted back by 1 second, an error range is $\pm 1$ second. Clock synchronization accuracy of this network clock synchronization method is low.

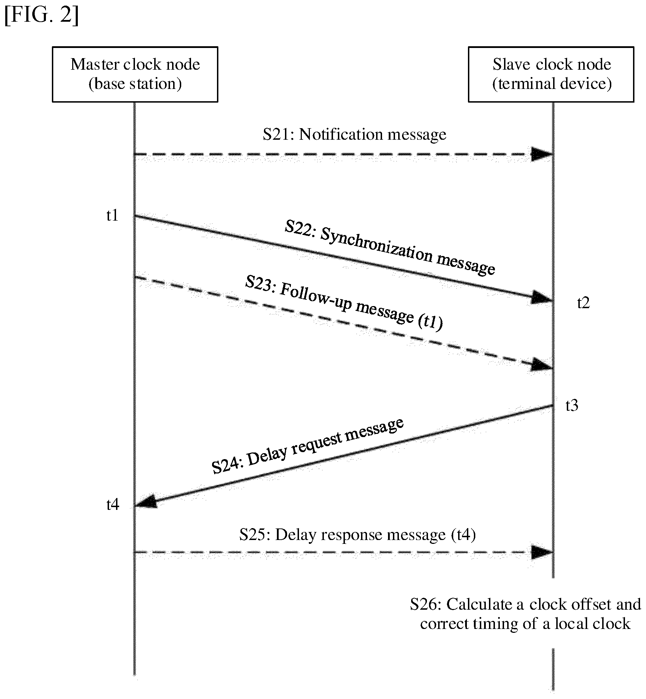

Refer to FIG. 2. FIG. 2 is a flowchart of a clock synchronization method. This procedure involves communication between a network device and a terminal device. The network device corresponds to a master clock (Master Clock) node, and the terminal device corresponds to a slave clock (Slave Clock) node. The master clock node has an external clock module, for example, an atomic clock or a global positioning system (GPS), or the master clock node may calibrate with an external clock to obtain high-accuracy absolute time. In a process in which the slave clock node communicates with the master clock node, the slave clock node calculates a clock offset of a local clock of the slave clock node relative to that of the master clock node, and corrects the local clock of the slave clock node based on the clock offset, so that the local clock of the slave clock node keeps synchronized with the clock of the master clock node. The following describes in detail the clock synchronization method shown in FIG. 1 by using an example in which a base station serves as a master clock node and a terminal device serves as a slave clock node. The method specifically includes the following several steps.

Step S21: The master clock node sends a notification message to the slave clock node.

Specifically, the master clock node may be a best clock source selected from a network. After the master clock node is selected, the master clock node may send the notification message to the slave clock node, to notify the slave clock node that the master clock node is the master clock node.

Step S22: The master clock node sends a synchronization message (Sync Message) to the slave clock node, and the master clock node records, based on a master clock, a sending moment t1 at which the master clock node sends the synchronization message; and when receiving the synchronization message, the slave clock node records, based on a slave clock, a receiving moment t2 of the synchronization message.

Step S23: The master clock node sends a follow_up message (Follow_up Message) to the slave clock node, where the follow_up message carries timestamp information t1, that is, the sending moment of the synchronization message.

Step S24: The slave clock node sends a delay request message (Delay_Req Message) to the master clock node, and the slave clock node records a sending moment t3 of the delay request message based on the slave clock; and when receiving the delay request message, the master clock node records a receiving moment t4 of the delay request message based on the master clock.

Step S25: The master clock node sends a delay responsequest message (Delay_ResponseMessage) to the slave clock node, where the delay request message carries timestamp information t4, that is, the receiving moment of the delay request message.

Step S26: The slave clock node calculates a clock offset and corrects time of a local clock.

Specifically, the slave clock node calculates the clock offset of the local clock of the slave clock node relative to that of the master clock node based on the sending moment t1 of the synchronization message, the receiving moment t2 of the synchronization message, the sending moment t3 of the delay request message, and the receiving moment t4 of the delay request message. The clock offset is recorded as Offset, and a relationship between Offset, t1, t2, t3, and t4 is as follows:

$$\text{Offset} = \frac{t2 + t3}{2} - \frac{t1 + t4}{2}$$

In addition, the slave clock node may calculate a transmission delay Delay of a signal from the master clock node to the slave clock node based on t1, t2, t3, and t4. A formula for calculating Delay is as follows:

$$\text{Delay} = \frac{t2 + t4}{2} - \frac{t1 + t3}{2}$$

After calculating the clock offset, the slave clock node further corrects timing of the local clock of the slave clock node based on the clock offset, so that the local clock of the slave clock node keeps high-accuracy synchronization with the clock of the master clock node, and the local clock of the slave clock node keeps high-accuracy synchronization with the absolute time.

As shown in FIG. 2, step S22 to step S26 may be denoted as one clock synchronization procedure. In one clock synchronization procedure, the base station needs to send timestamp information to the terminal device twice, where a first time is the timestamp information t1 carried in the follow-up message, and a second time is the timestamp information t4 carried in the delay request message. The base station needs to obtain a clock from a satellite, and then performs clock synchronization to update local time of the base station. Then, the base station interacts with the terminal to synchronize a clock of the terminal. Compared with the clock of the satellite, accuracy of the clock synchronized from the satellite to the terminal becomes lower. In addition, the base station needs to send the follow-up message after sending the synchronization message. If the base station corresponds to a plurality of terminal devices, after sending a synchronization message to each terminal device, the base station further needs to send a follow-up message to each terminal device. Therefore, the base station needs to configure a time-frequency resource for sending the synchronization message and the follow-up message, and schedule the time-frequency resource. When the base station corresponds to a large quantity of terminal devices, time-frequency resource overheads in a network are large, and complexity of scheduling the time-frequency resource by the base station is increased.

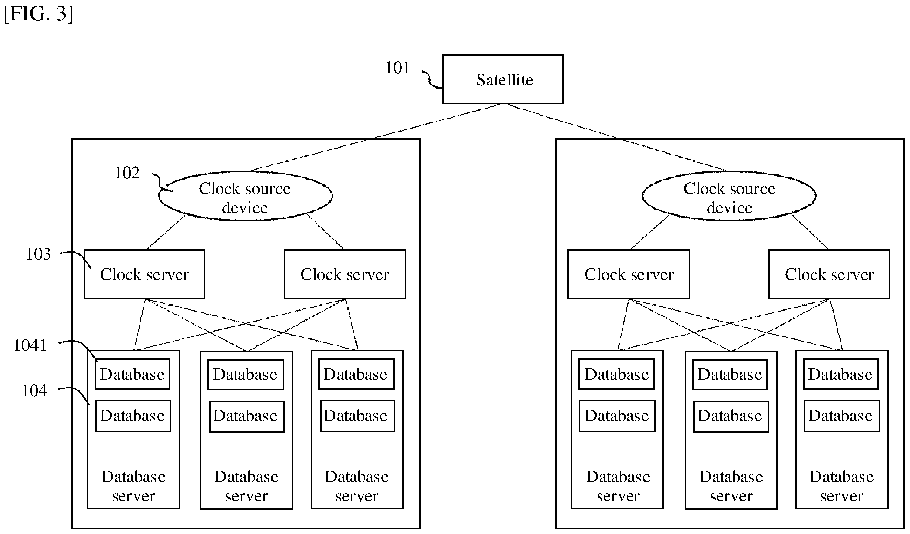

FIG. 3 is a diagram of a possible network architecture to which an embodiment of this application is applicable. The network architecture includes a clock source device 102, one or more clock servers 103, and one or more database servers 104. The clock source device 102 is in a communication connection to each clock server 103. Each clock server 103 is in a communication connection to each database server 104. One clock source device may simultaneously communicate with a plurality of clock servers, and one clock server 103 may simultaneously communicate with a plurality of database servers 104. A distributed database 1041, for example, GaussDB, may be deployed in the database server.

In an implementation, a clock source device 102 may be deployed in different clock domains. In an implementation, a plurality of clock source devices 102 may be deployed in a same clock domain, to avoid an increase in network pressure of one clock source device 102. In an implementation of this application, the clock source device 102 may include a GPS receiver, configured to communicate with a satellite 101, to obtain a local clock interval of the satellite 101. In an implementation, the clock source device 102 may include one or more atomic clocks, to avoid that an obtained clock interval of the satellite 101 is inaccurate when a GPS signal is interfered. In an implementation, the clock source device 102 may include a GPS receiver and an atomic clock. When a GPS signal is interfered, the clock source device 102 communicates with the clock server 103 via the atomic clock.

In an implementation of this application, a plurality of time servers may be deployed in a same data center. In an implementation of this application, a plurality of event servers may be deployed in a same time domain.

In an implementation, a first device may be a database server, and a second device is a time server. In an implementation, the first device may be a smart home device, and the second device may be a terminal.

The terminal is a device having a wireless transceiver function. The terminal may be deployed on land, and includes an indoor device, an outdoor device, a hand-held device, or a vehicle-mounted device; or may alternatively be deployed on a water surface (for example, on a ship); or may alternatively be deployed in air (for example, in an airplane, a balloon, or a satellite). The terminal may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), or a wireless terminal in a smart home (smart home), or may further include user equipment (user equipment, UE), or the like. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G (the 5th generation, 5G) network, a terminal device in a future evolved public land mobile network (public land mobile network, PLMN), or the like. The terminal sometimes may alternatively be referred to as a terminal device, user equipment (user equipment, UE), an access terminal device, a vehicle-mounted terminal, an industrial control terminal, a UE unit, a UE station, a mobile station, a remote station, a remote terminal device, a mobile device, a UE terminal device, a terminal device, a wireless communication device, a UE agent, a UE apparatus, or the like. The terminal may alternatively be fixed or movable. This is not limited in embodiments of this application.

The smart home device includes but is not limited to a smart desk lamp, a smart socket, a smart switch, a gateway, a door and window sensor, a curtain controller, a temperature and humidity sensor, a smart sound box, and a smart sweeper.

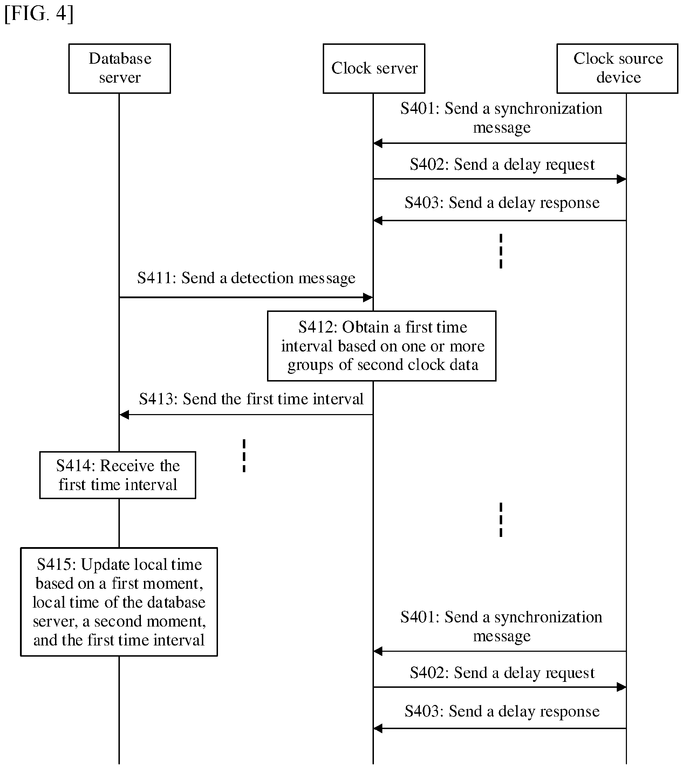

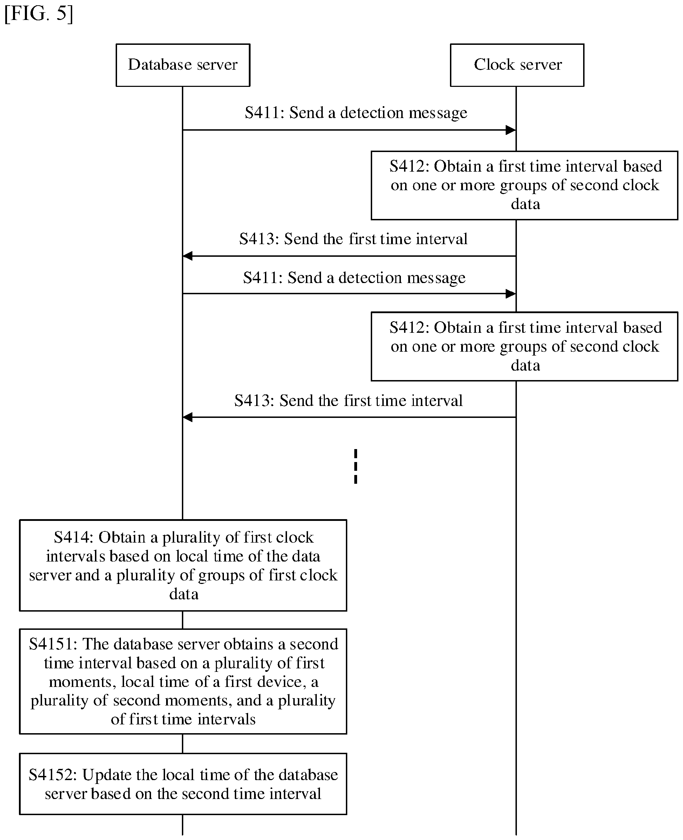

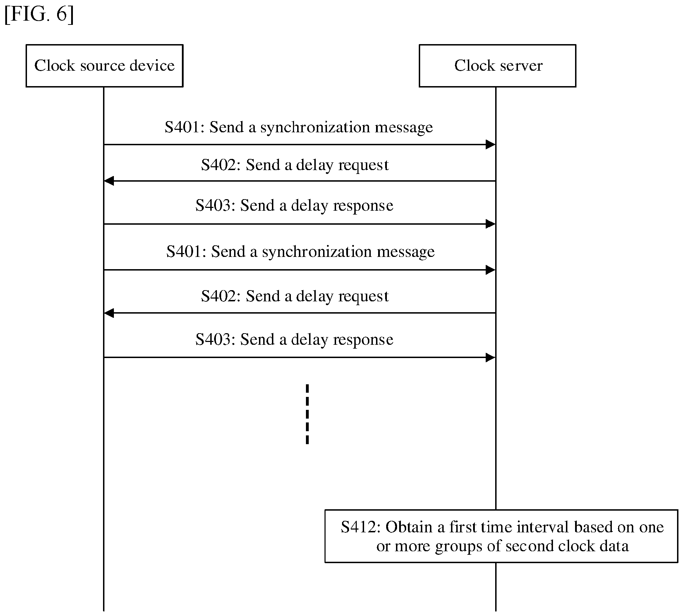

Herein, an example in which the first device may be a database server and the second device is a time server is used for description. Refer to FIG. 4 to FIG. 6. FIG. 4 is a signaling diagram of a clock synchronization method according to this application. The clock synchronization method in this embodiment includes the following steps:

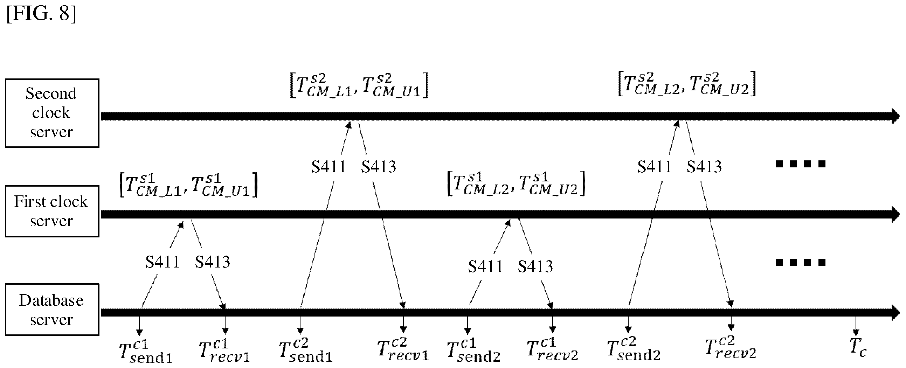

As shown in FIG. 8, step S411: A database server sends a detection message to a clock server, and records a first moment $T^{cn}_{sendm}$ at which the detection message is sent each time, where the detection message is used to request a first time interval, and the first time interval indicates a time range in which local time of a second device is located.

In an implementation, there may be a plurality of database servers, and there may be one clock server. The plurality of database servers perform clock synchronization with the same clock server. The database server sends the detection message to the one clock server a plurality of times. In an implementation, the database server may send the detection message to the clock server once every fixed duration, for example, every 10 milliseconds or 15 milliseconds.

In an implementation, the database server sends a plurality of detection messages to a plurality of clock servers. In other words, there may be a plurality of clock servers, and one database server may perform clock synchronization with the plurality of clock servers in one clock domain at the same time. For example, the database server may send the detection message to the plurality of clock servers at the same time. In an implementation, one or more clock servers may be deployed in different clock domains, and only time of another clock domain needs to be converted into time of a local clock domain. The conversion may be performed when a clock source device sends a message, or may be performed when the clock server receives the time. The database server sends the detection message to the clock servers in different clock domains at the same time. Because offsets of clock crystal oscillators of clocks in different clock domains are different, clock accuracy is different. Herein, the clocks in different clock domains may be comprehensively used for reference, to improve clock accuracy.

Optionally, a local clock interval of the clock server is obtained based on a plurality of groups of second clock data. The second clock data includes: a moment at which the clock source device sends a synchronization message to the clock server, a moment at which the clock server receives the synchronization message, a moment at which the clock server sends a delay request to the clock source device, a moment at which the clock source device receives the delay request, and local time of the clock server.

Step S412: The clock server obtains the local clock interval (the first time interval) of the clock server based on the local time of the clock server and one or more groups of second clock data. The second clock data includes: the moment at which the clock source device sends the synchronization message to the clock server, the moment at which the clock server receives the synchronization message, the moment at which the clock server sends the delay request to the clock source device, the moment at which the clock source device receives the delay request, and the local time of the clock server. A clock interval is a time range. The first time interval may be obtained through interaction between the clock server and the clock source device according to an NTP protocol or a PTP protocol. The second clock data is corresponding message sending and receiving moments in an interaction process between the clock server and the clock source device.

In an implementation, as shown in FIG. 4, FIG. 6, and FIG. 7, obtaining of the second clock data may include the following method. Step S401: The clock source device sends a synchronization message to the clock server, where the synchronization message indicates time $T_{synci}^{cj}$ at which the synchronization message is sent. Step S402: After receiving the synchronization message, the clock server obtains current local time $T_{synci}^{sj}$ by reading a network adapter timestamp, sends a delay request to the clock source device, and records time $T_{delayi}^{sj}$ at which the delay request is sent. Step S403: After receiving the delay request, the clock source device obtains current network adapter time $T_{delayi}^{cj}$ of the clock source device, and the clock source device sends a delay response to the clock server, where the delay response indicates time at which the clock source device receives the delay request. Step S401 to step S403 are repeated every preset duration. The second clock data may include $T_{synci}^{cj}$, $T_{synci}^{sj}$, $T_{delayi}^{sj}$, and $T_{delayi}^{cj}$.

In an implementation, according to the PTP protocol, the clock source device periodically broadcasts and sends a Sync packet, and sends a follow-up (follow-up) packet along with the Sync packet, to return a network adapter timestamp when the Sync packet is sent. The Sync packet or the follow-up packet sent by the clock source device carries the timestamp $T_{synci}^{cj}$ when the packet is sent. At the moment when the Sync packet is received, the clock server obtains the local timestamp $T_{synci}^{sj}$ by reading the network adapter timestamp. At the same time, the clock server immediately sends the delay request packet to the clock source, obtains the network adapter timestamp $T_{delayi}^{sj}$, and obtains, from a delay response packet that is returned subsequently, the network adapter timestamp $T_{delayi}^{cj}$ at the moment when the clock source device receives the delay request packet. The second clock data may include $T_{synci}^{cj}$, $T_{synci}^{sj}$, $T_{delayi}^{sj}$, and $T_{delayi}^{cj}$.

Optionally, the clock server obtains a group of second clock data every preset duration. The preset duration may be 15 milliseconds, 10 milliseconds, 5 milliseconds, or the like. In other words, the clock server obtains a group of second clock data $\{T_{synci}^{cj}, T_{synci}^{sj}, T_{delayi}^{sj}, T_{delayi}^{cj}\}$ every preset duration. j represents a number of the clock source device. For example, a number j of a first clock source device is 1, and a number j of a second clock source device is 2. i represents a number of the second clock data. For example, a number of the second clock data of the first clock source device may be 1, 2, 3, or the like, and a number of the second clock data of the second clock source device may also be 1, 2, 3, or the like. Certainly, how to perform numbering is not limited herein, and the number is only used to distinguish different clock data. Herein, $T^{cj}_{synci}$ is used as an example for description, and $T^{c1}_{sync1}$ refers to a moment at which the first clock source device sends a first Sync packet or a first follow-up packet.

Optionally, the clock server may continuously obtain the second clock data, but the clock server may store only two or more latest groups of second clock data. In an implementation, when the clock server interacts with a plurality of clock source devices, the clock server may store one or more groups of latest second clock data obtained through interaction with each clock source device.

In an implementation, the clock source devices may be a plurality of clock source devices that have a master-slave relationship. In an implementation, there may be a plurality of clock source devices, and one or more clock source devices may be separately deployed in different clock domains. Certainly, a plurality of clock source devices may alternatively be deployed in one clock domain.

Optionally, when receiving the detection message, the clock server obtains the local clock interval of the clock server based on the local time of the clock server and the latest one or more groups of second clock data. Herein, the local clock interval of the clock server is an interval that is calculated by the clock server and that includes accurate time of the clock source device.

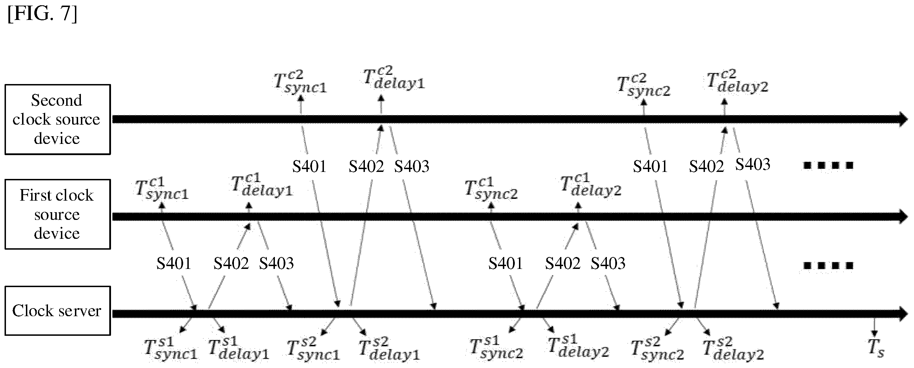

At a specific time point, the local time of the clock server is $T_s$, and in this case, the corresponding accurate time of the clock source device is $T_P$. To synchronize the time of the clock server with the time of the clock source device, the clock server estimates the time of the clock source device. It can be known from FIG. 7 that:

$$T^{cj}_{synci} + T_s - T^{sj}_{delayi} \leq T^{cj}_{synci} + T_s - T^{sj}_{synci} \leq T_P \leq T^{cj}_{delayi} + T_s - T^{sj}_{delayi} \leq$$

$$T^{cj}_{delayi} + T_s - T^{sj}_{synci}.$$

The clock interval of the clock server is as follows:

$$T^{cj}_{synci} + \left(T_s - T^{sj}_{synci}\right)(1 - \in 1) \leq T_p \leq T^{cj}_{delayi} + \left(T_s - T^{sj}_{delayi}\right)(1 + \in 1).$$

E 1 is a clock crystal oscillator drift speed of the clock server. For example, the clock crystal oscillator drift speed may be 50 ppm, 100 ppm, or 150 ppm, or 50 microseconds/second, 100 microseconds/second, or 200 microseconds/-second.

Because there are a plurality of groups of second clock data, a plurality of clock intervals of the clock server may be obtained.

For example,

$$\begin{cases} T^{c1}_{sync1} + \left(T_s - T^{s1}_{sync1}\right)(1 - \in 1) \leq T_p \leq T^{c1}_{delay1} + \left(T_s - T^{s1}_{delay1}\right)(1 + \in 1) \\ T^{c1}_{sync2} + \left(T_s - T^{s1}_{sync2}\right)(1 - \in 1) \leq T_p \leq T^{c1}_{delay2} + \left(T_s - T^{s1}_{delay2}\right)(1 + \in 1) \\ T^{c2}_{sync1} + \left(T_s - T^{s2}_{sync1}\right)(1 - \in 1) \leq T_p \leq T^{c2}_{delay1} + \left(T_s - T^{s2}_{delay1}\right)(1 + \in 1) \\ T^{c2}_{sync2} + \left(T_s - T^{s2}_{sync2}\right)(1 - \in 1) \leq T_p \leq T^{c2}_{delay2} + \left(T_s - T^{s2}_{delay2}\right)(1 + \in 1) \end{cases}.$$

Herein, according to a Marzullo algorithm, the local clock interval of the clock server is obtained based on the plurality of clock intervals of the clock server.

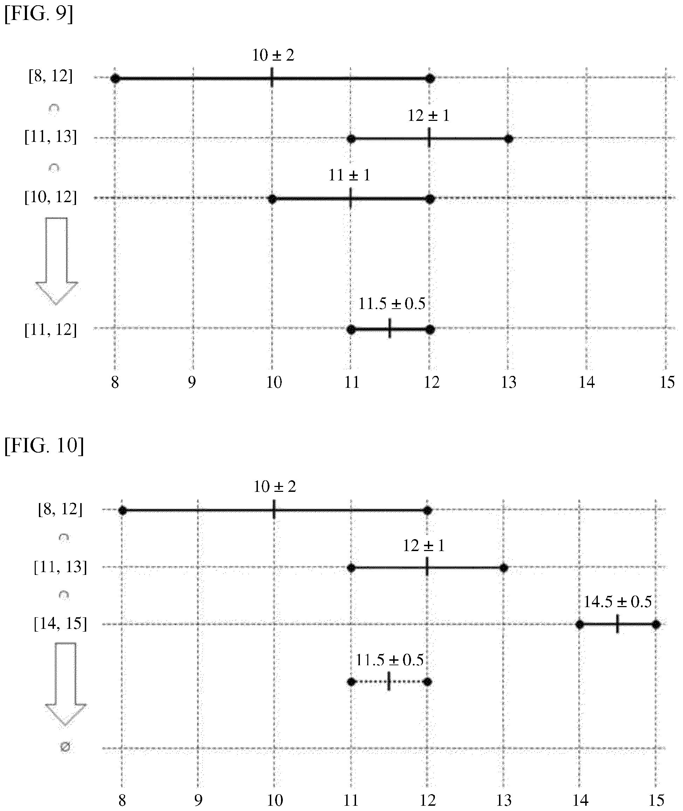

In an implementation, the local clock interval of the clock server is an intersection of the plurality of clock intervals of the clock server. For example, as shown in FIG. 9, the plurality of clock intervals of the clock server are [8, 12], [11, 13], and [10, 12] respectively. In this case, the local clock interval of the clock server is [11, 12].

In an implementation, when there is no common intersection between the plurality of clock intervals of the clock server, the local clock interval of the clock server is an intersection of clock intervals of a plurality of clock servers that have an intersection. For example, as shown in FIG. 10, the plurality of clock intervals of the clock server are [8,12], [11,13], and [14,15] respectively. In this case, the local clock interval of the clock server is [11,12].

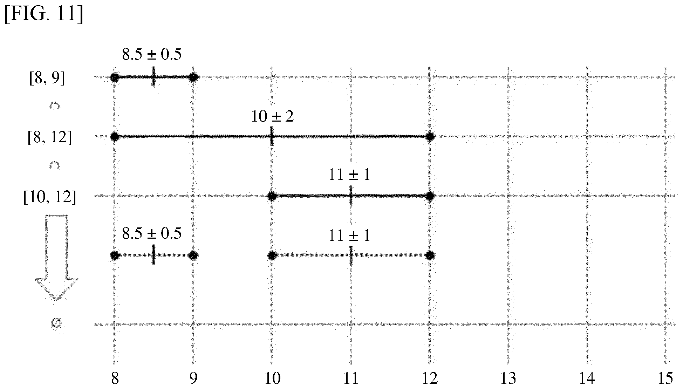

In an implementation, when the clock intervals of the plurality of clock servers that have an intersection have a plurality of intersections, the local clock interval of the clock server is an intersection of clock intervals of clock servers that have a largest quantity of intersections. In an implementation, when the clock intervals of the plurality of clock servers that have an intersection have a plurality of intersections, and a number of clock intervals of clock servers corresponding to each intersection is equal, and the local clock interval of the clock server is an intersection with a largest range. For example, as shown in FIG. 11, the plurality of clock intervals of the clock server are [8, 12], [8,9], and [10,12] respectively. In this case, the local clock interval of the clock server is [10, 12].

Step S413: The clock server sends the local clock interval (the first time interval) of the clock server to the database server. The first time interval may be carried in a message. For example, the clock server sends the message to the database server, where the message carries the first time interval. In other words, the clock server does not directly send specific time to the database server each time, but sends the calculated local clock interval (the first time interval) of the clock server to the database server. Certainly, this does not affect update of the local time of the clock server. The clock server can update the local time of the clock server.

As shown in FIG. 8, step S414: The database server receives the first time interval, and records a second moment $T_{recvm}^{cn}$ at which the database server receives the first time interval.

In an implementation, the database server sends a detection message to one clock server, and the database server receives the first time interval. In an implementation, the database server sends a plurality of detection messages to one clock server, and the database server receives a plurality of different first time intervals. In an implementation, the database server sends a plurality of detection messages to a plurality of clock servers, and the database server receives a plurality of different first time intervals.

Herein, the database server may send the detection message to the clock server once every fixed duration, for example, every 10 milliseconds or 15 milliseconds. After sending the detection message, the database server receives the first time interval. The moment at which the database server receives the first time interval may be before, after, or at the same time when the database server sends a detection message next time. There is no strict sequence between the moment at which the database server receives the first time interval and a moment at which the database server sends the detection message next time.

Step S415: The database server updates local time of the database server based on the first moment, the local time of the database server, the second moment, and the first time interval.

Herein, the local time of the database server before the update may be time when clock synchronization is triggered, and may be current time of the database server. Because a time difference exists when a program is executed, the local time of the database server before the update is not limited herein, and the time may be any time of the database server before the update. Certainly, time before the update that is closer to real time indicates higher accuracy of clock synchronization.

In an implementation, updated local time of the database server may be any time in the following interval:

$$\left( T_{CM\_Lm}^{sn} + (T_c - T_{recvm}^{cn})(1 - \epsilon 2) \right) \le T_p \le \left( T_{CM\_Um}^{sn} + (T_c - T_{sendm}^{cn})(1 + \epsilon 2) \right).$$

$\varepsilon 2$ is a clock crystal oscillator drift of the database server, where i ∈ n, and j ∈ m. For example, the clock crystal oscillator drift speed may be 50 ppm, 100 ppm, or 150 ppm, or 50 microseconds/second, 100 microseconds/second, or 200 microseconds/second. The local time of the database server is $T_c$, and in this case, corresponding accurate time of the clock source device is $T_p$. $T_{sendm}^{cn}$ is the first moment at which the database server sends the detection message, $T_{recvm}^{cn}$ is the second moment at which the database server receives the first time interval, and $\left[ T_{CM\_Lm}^{sn}, T_{CM\_Um}^{sn} \right]$ is the first time interval.

In an implementation, step S415 includes the following step.

Step S4151: The database server obtains a second time interval based on a plurality of first moments, the local time of the first device, a plurality of second moments, and a plurality of first time intervals. The second time interval is a time range in which the local time of the database server is located. The second time interval may alternatively be understood as a time range in which actual time is located, where the actual time refers to local time of the clock source device.

In an implementation, step S4151 may include the following step.

Step S4251: The first device obtains a plurality of third time intervals based on the plurality of first moments, the local time of the first device, the plurality of second moments, and the plurality of first time intervals. Different third time intervals are trusted time intervals obtained by the first device based on different first time intervals. Herein, the trusted time interval is a time range in which the actual time is most likely to be located, and different first time intervals may correspond to different third time intervals.

The database server obtains the plurality of first clock intervals based on the local time of the database server and a plurality of groups of first clock data, where the plurality of first clock intervals are a plurality of time intervals including a plurality of pieces of actual time. Herein, the actual time refers to the time of the clock source device, and the plurality of pieces of actual time indicate time of different clock source devices, or actual time of a same clock source device at different moments.

As shown in FIG. 8, the first clock data includes the first moment $T^{cn}_{sendm}$ at which the database server sends the detection message, the second moment $T^{cn}_{recvm}$ at which the database server receives the first time interval, and the first time interval $\left[T^{sn}_{CM\_Lm}, T^{sn}_{CM\_Um}\right]$. m represents a number of first clock data corresponding to each clock server, for example, numbers of the first clock data corresponding to a first clock server may be 1, 2, 3, or the like, and numbers of the first clock data corresponding to a second clock server may also be 1, 2, 3, or the like. n represents a number of the clock server, for example, the number n of the first clock server is 1, and the number n of the second clock server is 2. Certainly, how to perform numbering is not limited herein, and the numbering is merely used to distinguish between different clock data. Herein, $T^{c1}_{send1}$ is used as an example for description, and $T^{c1}_{send1}$ refers to a first moment at which the database server sends a first detection message to the first clock server.

In an implementation, the database server may continuously obtain the first clock data, but the database server may store only two or more latest groups of first clock data.

At a specific time point, the local time of the database server is $T_c$. In this case, corresponding accurate time of the clock source device is $T_P$, that is, the actual time. Due to an error caused by a transmission protocol, the clock server can only calculate an interval in which the actual time is located, but cannot obtain the actual time. To synchronize the time of the database server with the time of the clock source device, the database server estimates the time of the clock source device. It can be learned from FIG. 8 that the third time interval is:

$$\left(T^{si}_{CM\_Lj} + \left(T_c - T^{ci}_{recvj}\right)(1 - \epsilon 2)\right) \le T_p \le \left(T^{si}_{CM\_Uj} + \left(T_c - T^{ci}_{sendj}\right)(1 + \epsilon 2)\right)$$

$\varepsilon 2$ is a clock crystal oscillator drift of the database server, where $i \in n$, and $j \in m$. For example, the clock crystal oscillator drift speed may be 50 ppm, 100 ppm, or 150 ppm, or 50 microseconds/second, 100 microseconds/second, or 200 microseconds/second.

In other words, a supremum of the first time interval is obtained based on the local time of the first device, corresponding moments at which the first device sends the plurality of detection messages, and a supremum of the local clock interval. An infimum of the first time interval is obtained based on the local time of the first device, the corresponding moment at which the first device receives the local clock interval, and an infimum of the local clock interval.

Step S4151 further includes step S4252: The first device performs an operation on the plurality of third time intervals to obtain the second time interval, where the second time interval is an intersection of at least two third time intervals.

The database server may perform an operation on the plurality of first clock intervals according to a Marzullo algorithm to obtain a current clock interval of the database server.

In an implementation, the current clock interval (the second time interval) of the database server is an intersection of a plurality of third time intervals. For example, as shown in FIG. 9, the plurality of third time intervals are [8, 12], [11, 13], and [10,12] respectively. In this case, the current clock interval of the database server is [11, 12].

In an implementation, when there is no common intersection between the plurality of third time intervals, the current clock interval (the second time interval) of the database server is an intersection of a plurality of third time intervals that have an intersection. For example, as shown in FIG. 10, the plurality of third time intervals are [8, 12], [11,13], and [14,15] respectively. In this case, the current clock interval of the database server is [11,12].

In an implementation, when the plurality of third time intervals that have an intersection have a plurality of intersections, the current clock interval (the second time interval) of the database server is an intersection of third time intervals that have a largest quantity of intersections. In an implementation, when the plurality of third time intervals that have an intersection have a plurality of intersections, and quantities of third time intervals corresponding to the intersections are equal, the current clock interval (the second time interval) of the database server is an intersection with a largest range. For example, as shown in FIG. 11, the plurality of third time intervals are [8,12], [8,9], and [10,12] respectively. In this case, the current clock interval of the database server is [10,12].

In an implementation, an operating system is installed on the database server, and a first instance and a second instance are run in the operating system of the database server. The current clock interval (the second time interval) of the first device is stored in the first instance. For example, the first instance may be a process or a thread, for example, a clock process, or a thread in a clock process. When a second process needs to synchronize time, the second process does not need to access time of a physical network interface card, and does not need to access a back end, for example, a database. This saves network overheads, saves intranet bandwidth, and reduces a response delay.

For example, the first instance is a clock process, and the second instance may be a thread in an application process. The second instance may be an application process or another process that requires clock synchronization, for example: a database process. A database serves as an application deployed on the database server. Clock data may be stored in storage space corresponding to a clock process. The database process communicates with the clock process according to a TCP protocol. The database process periodically initiates a time fetch request to the clock process, and the clock process sends the clock data to the database process. In an implementation, the local clock interval of the database server is stored in the storage space corresponding to a first process. When the second process has a time fetch requirement, the second process directly obtains time from the storage space corresponding to the first process. The storage space may be shared storage space of the first process and the second process.

Optionally, the operating system of the first device is further configured to run the second process. The method further includes: The second process sends the time fetch request to the first process; the first process receives the time fetch request, and sends the current clock interval of the first device to the second process; and the second process receives the current clock interval of the first device sent by the first process.

Optionally, when the first process receives the time fetch request, the database server obtains the current clock interval of the database server based on the plurality of first clock intervals, and stores the current clock interval of the database server in the clock process.

Optionally, the plurality of groups of first clock data are a plurality of groups of first clock data closest to a third moment, and the third moment is a moment at which the first process receives the time fetch request. In other words, the first clock interval is a clock interval closest to the third moment.

Step S4152: The database server updates the local time of the database server based on the second time interval, where updated local time of the first device is a moment in the second time interval.

In an implementation, the local time of the database server may be updated to a supremum of the current clock interval (the second time interval) of the database server. It can be ensured that the time provided by the database server does not decrease monotonically, and it is ensured that the timestamp does not roll back. In an implementation, the local time of the first device may be updated to an infimum of the current clock interval of the database server or any value in the current clock interval (the second time interval) of the database server.

Compared with a conventional clock synchronization method, in the clock synchronization method described in this embodiment, the database server directly obtains the local clock interval of the time server from the time server, and then updates the local time of the database server based on the corresponding moment at which the time server receives the local clock interval, the local time of the database server, and the local clock interval. Because time accuracy is reduced when the time server updates the local time, in this clock synchronization method, the local time of the database server is not directly updated based on the local time of the time server, so that accuracy of a clock synchronized to the database server is improved. In addition, when the clock of the database server and the clock of the time server are synchronized, the database server only needs to receive a message of the local time interval of the time server sent by the time server, so that time-frequency resource overheads are reduced.

In an embodiment of this application, the terminal may also perform clock synchronization with the clock server according to a same clock synchronization method. For details, refer to the clock synchronization methods of the database server and the clock server. Details are not described herein again.

In an embodiment of this application, the smart home device may also perform clock synchronization with the terminal according to a same clock synchronization method. The smart home device is provided with a time service based on the local time interval of the terminal, where the local time interval of the terminal is obtained based on synchronization between the terminal and the clock server or a base station clock. A specific method is similar to the clock synchronization method of the terminal and the clock server in the foregoing embodiments.

In a high-concurrency scenario, a typical indicator for measuring a transaction processing capability of a database is a number of transactions processed per second. However, the database has strict A (atomicity), C (consistency), I (isolation), and D (durability) requirements. If only locking is used to resolve conflicts caused by concurrent read and write operations, the transaction processing performance is greatly reduced. Therefore, mainstream databases use a multi-version concurrency control (MVCC) method to implement read/write isolation, to prevent concurrent data blocking caused by lock blocking. Generally speaking, the MVCC saves a historical version of data and compares versions to determine data visibility. A problem is how to provide the database with a globally increasing version number, that is, a consistency sequence number.

In an embodiment of this application, the clock synchronization method further includes: The second instance obtains the second time interval stored in the storage space corresponding to the first instance; and the second instance generates a transaction consistency sequence number based on the second time interval or the updated local time of the first device.

The database is used as an example for description. The current clock interval of the database server is stored in the storage space corresponding to the clock process. When the database needs to generate the transaction consistency sequence number, the database process sends a time fetch message to the clock process to request to obtain the current clock interval of the database server, or the database process directly reads shared memory space to obtain the current clock interval of the database server.

In an implementation, the sequence number may be generated based on a supremum of the current clock interval of the database server. In an implementation, the sequence number may be generated based on an infimum of the current clock interval of the database server or any value in the current clock interval of the database server.

When the sequence number is generated based on the supremum of the current clock interval of the database server, the method further includes: When receiving the time fetch request, the first instance sleeps; and the first instance sends the current clock interval of the database server to the second instance after sleeping for preset duration. Certainly, the second instance may alternatively sleep after receiving the current clock interval of the database server.

Optionally, the preset duration for sleeping is greater than or equal to a difference between the supremum and the infimum of the current clock interval of the database server. In this way, it can be ensured that when the supremum of the current clock interval of the database server passes, a sequence number obtained next time is greater than a current sequence number. It can be ensured that the sequence number provided by the database server does not decrease monotonically, and the sequence number increases progressively. Consistency of sequence numbers is ensured.

In an embodiment of this application, the terminal or the smart home device is also applicable to the foregoing clock synchronization method. Details are not described herein again.

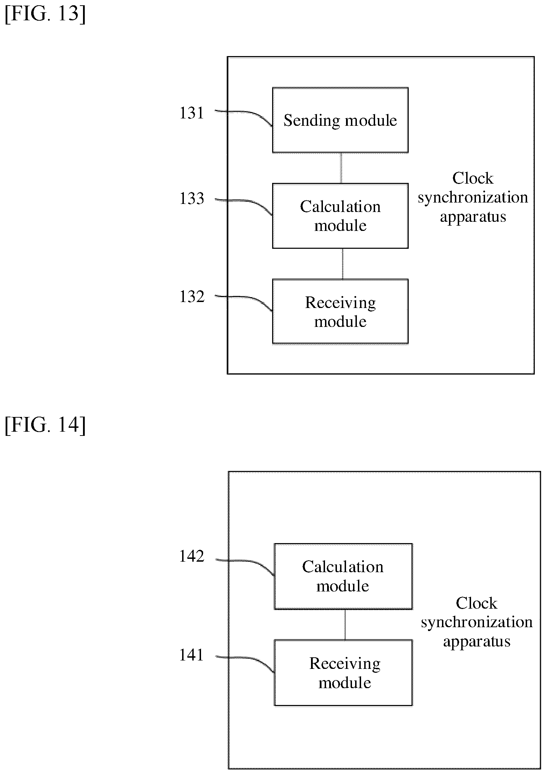

An embodiment of this application provides a clock synchronization apparatus. As shown in FIG. 13, the clock synchronization apparatus is used in a first device and includes:

a sending module 131, configured to send a detection message to a second device, where the detection message is used to request a first time interval, and the first time interval indicates a time range in which local time of the second device is located;

a receiving module 132, configured to receive the first time interval; and

a calculation module 133, configured to update local time of the first device based on a first moment, the local time of the first device, a second moment, and the first time interval, where the second moment is a moment at which the first device receives the first time interval, and the first moment is a moment at which the first device sends the detection message to the second device.

This embodiment provides a clock synchronization apparatus. The apparatus has a function of implementing the clock synchronization method in the foregoing embodiments. The function may be implemented by hardware, or may be implemented by hardware executing corresponding software. The hardware or the software includes one or more modules corresponding to the function. Details are not described herein again.

An embodiment provides a clock synchronization method. The clock synchronization method in this embodiment includes the following steps.

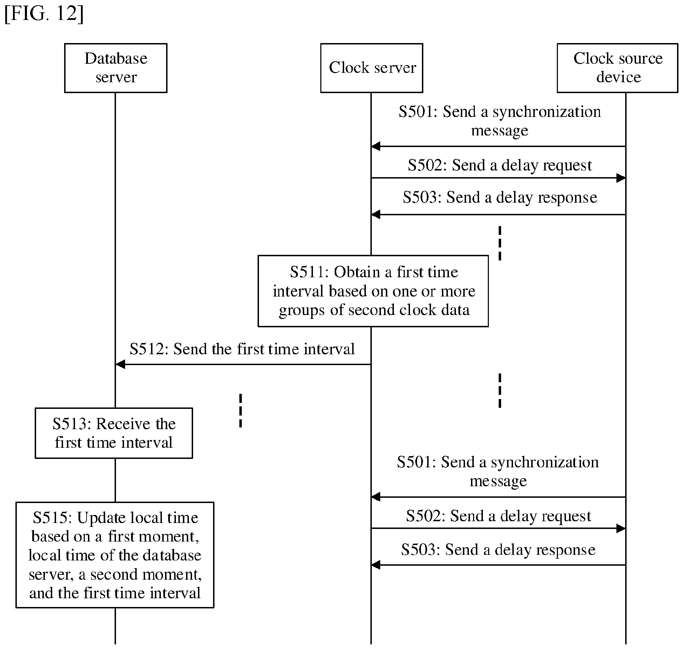

As shown in FIG. 12, step S511: A second device obtains a local clock interval (a first time interval) of a clock server based on local time of the clock server and one or more groups of second clock data. Content of step S511 is the same as that of step S412, and step S501 to step S503 are the same as step S401 to step S403. Details are not described herein again.

Step S512: The clock server sends the first time interval to a database server. Content of step S512 is the same as that of step S413, and details are not described herein again.

Step S513: The database server receives the first time interval $\left[T_{CM\_Lm}^{sn}, T_{CM\_Um}^{sn}\right]$, where the first time interval indicates a time range in which the local time of the clock server is located. Content of step S513 is the same as that of step S414, and details are not described herein again.

Herein, the receiving the first time interval is the same as the receiving the first time interval in the foregoing embodiments, and details are not described again. A difference lies in that the clock server may actively send the first time interval to the database server, and the database server updates local time of the database server after receiving the first time interval.

Step S514: The database server updates the local time of the database server based on local time $T_c$ of the first device, a second moment $T_{recvm}^{cn}$, and the first time interval $\left[T_{CM\_Lm}^{sn}, T_{CM\_Um}^{sn}\right]$, where the second moment is a moment at which the database server receives the first time interval.

Herein, the local time of the database server before the update may be time when clock synchronization is triggered, and may be current time of the database server. Because a time difference exists when a program is executed, the local time of the database server before the update is not limited herein, and the time may be any time of the database server before the update. Certainly, time before the update that is closer to real time indicates higher accuracy of clock synchronization.

In an implementation, updated local time of the database server may be any time in an interval to which $T_p$ belongs.

$$\left(T^{sn}_{CM\_Lm} + (T_c - T^{cn}_{recvm})(1 - \epsilon 2)\right) \leq T_p \leq \left(T^{sn}_{CM\_Um} + (T_c - T^{cn}_{recvm})(1 + \epsilon 2)\right)$$

$\epsilon 2$ is a clock crystal oscillator drift of the database server, where i $\in$ n, and j $\in$ m. For example, the clock crystal oscillator drift speed may be 50 ppm, 100 ppm, or 150 ppm, or 50 microseconds/second, 100 microseconds/second, or 200 microseconds/second.

When the first device receives a plurality of first time intervals, the first device updates the local time of the first device based on the local time of the first device, a plurality of second moments, and the plurality of first time intervals.

In an implementation, that the first device updates the local time of the first device based on the local time of the first device, a plurality of second moments, and the plurality of first time intervals includes:

Step S5141: The first device obtains a plurality of third time intervals based on the local time of the first device, the plurality of second moments, and the plurality of first time intervals, where different third time intervals are trusted time intervals obtained by the first device based on different first time intervals. The third time interval may be:

$$\left(T^{sn}_{CM\_Lm} + (T_c - T^{cn}_{recvm})(1 - \epsilon 2)\right) \leq T_p \leq \left(T^{sn}_{CM\_Um} + (T_c - T^{cn}_{recvm})(1 + \epsilon 2)\right)$$

m represents a number of first clock data corresponding to each clock server, for example, numbers of the first clock data corresponding to a first clock server may be 1, 2, 3, or the like, and numbers of the first clock data corresponding to a second clock server may also be 1, 2, 3, or the like. n represents a number of the clock server, for example, the number n of the first clock server is 1, and the number n of the second clock server is 2. Certainly, how to perform numbering is not limited herein, and the numbering is merely used to distinguish between different clock data.

Step S5142: The first device performs an operation on the plurality of third time intervals to obtain a second time interval, where the second time interval is an intersection of at least two third time intervals, and the second time interval is a time range in which the local time of the first device is located. Content of step S5142 is similar to that of step S4252, and details are not described herein again.

Step S5143: The first device updates the local time of the first device based on the second time interval, where updated local time of the first device is a moment in the second time interval. Content of step S5143 is similar to that of step S4152, and details are not described herein again.

An embodiment provides a clock synchronization apparatus. The apparatus has a function of implementing the clock synchronization method in the foregoing embodiments. The function may be implemented by hardware, or may be implemented by hardware executing corresponding software. The hardware or the software includes one or more modules corresponding to the function.

An embodiment of this application provides a clock synchronization apparatus. As shown in FIG. 14, the clock synchronization apparatus is used in a first device and includes:

a receiving module 141, configured to receive a first time interval, where the first time interval indicates a time range in which local time of a second device is located; and

a calculation module 142, configured to update local time of the first device based on the local time of the first device, a second moment, and the first time interval, where the second moment is a moment at which the first device receives the first time interval.

An embodiment of this application provides a clock synchronization apparatus. The apparatus has a function of implementing the clock synchronization method according to any one of the foregoing embodiments. The function may be implemented by hardware, or may be implemented by hardware executing corresponding software. The hardware or the software includes one or more modules corresponding to the function. Details are not described herein again.

An embodiment of this application provides an electronic device, including: a processor; and a memory configured to store instructions executable by the processor, where the processor is configured to perform the clock synchronization method according to any one of the foregoing embodiments.

An embodiment of this application provides a computer-readable storage medium. The computer-readable storage medium stores computer instructions, and when the computer instructions are executed, the clock synchronization method according to any one of the foregoing embodiments is implemented. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive Solid State Disk), or the like.

An embodiment of this application provides a database server, including the clock synchronization apparatus according to any one of the foregoing embodiments.

An embodiment of this application provides a terminal, including the clock synchronization apparatus according to any one of the foregoing embodiments.

An embodiment of this application provides a smart home device, including the foregoing clock synchronization apparatus.

An embodiment of this application provides a computer program product. When a computer program is executed by a computer, a processor or the computer may be enabled to perform corresponding steps and/or procedures in the foregoing method embodiments.

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner.

Although this application is described with reference to specific features and the embodiments thereof, obviously, various modifications and combinations may be made to them without departing from the spirit and scope of this application. Correspondingly, the specification and accompanying drawings are merely example descriptions of this application defined by the appended claims, and are considered as any of or all modifications, variations, combinations, or equivalents that cover the scope of this application. It is clear that a person skilled in the art can make various modifications and variations to this application without departing from the scope of this application. This application is intended to cover these modifications and variations of this application provided that they fall within the scope of protection defined by the claims of this application and their equivalent technologies.

**Claims**

1. A clock synchronization method, applied to a first device, comprising:

   sending, by the first device, a detection message to a second device, wherein the detection message is used to request a first time interval, and the first time interval indicates a time range in which local time of the second device is located;
   receiving, by the first device, the first time interval; and
   updating, by the first device, local time of the first device based on a first moment, the local time of the first device, a second moment, and the first time interval, wherein the first moment is a moment at which the first device sends the detection message to the second device, and the second moment is a moment at which the first device receives the first time interval.

2. The clock synchronization method according to claim 1, wherein the method further comprises:

   sending, by the first device, a plurality of detection messages to one or more second devices;
   receiving, by the first device, a plurality of first time intervals; and
   updating, by the first device, the local time of the first device based on a plurality of first moments, the local time of the first device, a plurality of second moments, and the plurality of first time intervals.

3. The clock synchronization method according to claim 2, wherein the updating, by the first device, the local time of the first device based on a plurality of first moments, the local time of the first device, a plurality of second moments, and the plurality of first time intervals comprises:

   obtaining, by the first device, a second time interval based on the plurality of first moments, the local time of the first device, the plurality of second moments, and the plurality of first time intervals, wherein the second time interval is a time range in which the local time of the first device is located; and
   updating, by the first device, the local time of the first device based on the second time interval, wherein updated local time of the first device is a moment in the second time interval.

4. The clock synchronization method according to claim 3, wherein the obtaining, by the first device, a second time interval based on the plurality of first moments, the local time of the first device, the plurality of second moments, and the plurality of first time intervals comprises:

obtaining, by the first device, a plurality of third time intervals based on the plurality of first moments, the local time of the first device, the plurality of second moments, and the plurality of first time intervals, wherein different third time intervals are trusted time intervals obtained by the first device based on different first time intervals; and performing, by the first device, an operation on the plurality of third time intervals to obtain the second time interval, wherein the second time interval is an intersection of at least two third time intervals.

5. The clock synchronization method according to claim 4, wherein the second time interval is obtained by the first device by performing an operation on the plurality of third time intervals according to a Marzullo algorithm.

6. The clock synchronization method according to claim 4 or 5, wherein suprema of the plurality of third time intervals are obtained based on the local time of the first device, the plurality of first moments, and suprema of the plurality of first time intervals; and
infima of the plurality of third time intervals are obtained based on the local time of the first device, the plurality of first moments, and infima of the plurality of first time intervals.

7. The clock synchronization method according to claims 4 to 6, wherein an operating system is installed on the first device, the operating system of the first device is configured to run a first instance, and the second time interval is stored in storage space corresponding to the first instance.

8. The clock synchronization method according to claim 7, wherein the operating system of the first device is further configured to run a second instance, and the method further comprises:

obtaining, by the second instance, the second time interval stored in the storage space corresponding to the first instance; and
generating, by the second instance, a transaction consistency sequence number based on the second time interval or the updated local time of the first device.

9. The clock synchronization method according to claim 8, wherein the transaction consistency sequence number is generated based on a supremum of the second time interval.

10. The clock synchronization method according to any one of claims 1 to 9, wherein the first device is a database server, and the second device is a time server.

11. A clock synchronization method, applied to a first device, comprising:

receiving, by the first device, a first time interval, wherein the first time interval indicates a time range in which local time of a second device is located; and
updating, by the first device, local time of the first device based on the local time of the first device, a second moment, and the first time interval, wherein the second moment is a moment at which the first device receives the first time interval.

12. The clock synchronization method according to claim 11, wherein the method further comprises: receiving, by the first device, a plurality of first time intervals; and
updating, by the first device, the local time of the first device based on the local time of the first device, a plurality of second moments, and the plurality of first time intervals.

13. The clock synchronization method according to claim 12, wherein the updating, by the first device, the local time of the first device based on the local time of the first device, a plurality of second moments, and the plurality of first time intervals comprises:

obtaining, by the first device, a plurality of third time intervals based on the local time of the first device, the plurality of second moments, and the plurality of first time intervals, wherein different third time intervals are trusted time intervals obtained by the first device based on different first time intervals;
performing, by the first device, an operation on the plurality of third time intervals to obtain a second time interval, wherein the second time interval is an intersection of at least two third time intervals, and the second time interval is a time range in which the local time of the first device is located; and

updating, by the first device, the local time of the first device based on the second time interval, wherein updated local time of the first device is a moment in the second time interval.

14. A clock synchronization apparatus, used in a first device, comprising:

a sending module, configured to send a detection message to a second device, wherein the detection message is used to request a first time interval, and the first time interval indicates a time range in which local time of the second device is located;

a receiving module, configured to receive the first time interval; and

a calculation module, configured to update local time of the first device based on a first moment, the local time of the first device, a second moment, and the first time interval, wherein the second moment is a moment at which the first device receives the first time interval, and the first moment is a moment at which the first device sends the detection message to the second device.

15. The clock synchronization apparatus according to claim 14, wherein

the sending module is configured to send a plurality of detection messages to one or more second devices;

the receiving module is configured to receive a plurality of first time intervals; and

the calculation module is configured to update the local time of the first device based on a plurality of first moments, the local time of the first device, a plurality of second moments, and the plurality of first time intervals.

16. The clock synchronization apparatus according to claim 15, wherein the calculation module is further configured to obtain a second time interval based on the plurality of first moments, the local time of the first device, the plurality of second moments, and the plurality of first time intervals, wherein the second time interval is a time range in which the local time of the first device is located; and

the calculation module is further configured to update the local time of the first device based on the second time interval, wherein updated local time of the first device is a moment in the second time interval.

17. The clock synchronization apparatus according to claim 16, wherein the calculation module is further configured to obtain a plurality of third time intervals based on the plurality of first moments, the local time of the first device, the plurality of second moments, and the plurality of first time intervals, wherein different third time intervals are trusted time intervals obtained by the first device based on different first time intervals; and

the calculation module is further configured to perform an operation on the plurality of third time intervals to obtain the second time interval, wherein the second time interval is an intersection of at least two third time intervals.

18. The clock synchronization apparatus according to claim 17, wherein the second time interval is obtained by the calculation module by performing an operation on the plurality of third time intervals according to a Marzullo algorithm.

19. The clock synchronization apparatus according to claim 17 or 18, wherein suprema of the plurality of third time intervals are obtained based on the local time of the first device, the plurality of first moments, and suprema of the plurality of first time intervals; and

infima of the plurality of third time intervals are obtained based on the local time of the first device, the plurality of first moments, and infima of the plurality of first time intervals.

20. The clock synchronization apparatus according to claims 17 to 19, wherein an operating system is installed on the first device, the operating system of the first device is configured to run a first instance, and the second time interval is stored in storage space corresponding to the first instance.

21. The clock synchronization apparatus according to claim 20, wherein the operating system of the first device is further configured to run a second instance, wherein the second instance obtains the second time interval stored in the storage space corresponding to the first instance; and the second instance generates a transaction consistency sequence number based on the second time interval or the updated local time of the first device.

22. The clock synchronization apparatus according to claim 21, wherein the transaction consistency sequence number is generated based on a supremum of the second time interval.

23. The clock synchronization apparatus according to any one of claims 14 to 22, wherein the first device is a database server, and the second device is a time server.

24. A clock synchronization apparatus, used in a first device, comprising:

a receiving module, configured to receive a first time interval, wherein the first time interval indicates a time range in which local time of a second device is located; and
a calculation module, configured to update local time of the first device based on the local time of the first device, a second moment, and the first time interval, wherein the second moment is a moment at which the first device receives the first time interval.

25. The clock synchronization apparatus according to claim 24, wherein

the receiving module is configured to receive a plurality of first time intervals; and
the calculation module is configured to update the local time of the first device based on the local time of the first device, a plurality of second moments, and
the plurality of first time intervals.

26. The clock synchronization apparatus according to claim 25, wherein the calculation module is further configured to obtain a plurality of third time intervals based on the local time of the first device, the plurality of second moments, and the plurality of first time intervals, wherein different third time intervals are trusted time intervals obtained by the first device based on different first time intervals;

the calculation module is further configured to perform an operation on the plurality of third time intervals to obtain a second time interval, wherein the second time interval is an intersection of at least two third time intervals, and the second time interval is a time range in which the local time of the first device is located; and
the calculation module is further configured to update the local time of the first device based on the second time interval, wherein updated local time of the first device is a moment in the second time interval.

27. An electronic device, comprising:

a processor; and
a memory configured to store instructions executable by the processor, wherein the processor is configured to perform the clock synchronization method according to any one of claims 1 to 10 or the clock synchronization method according to any one of claims 11 to 13.

28. A computer-readable storage medium, wherein the computer-readable storage medium stores computer instructions, and when the computer instructions are executed, the clock synchronization method according to any one of claims 1 to 10 or the clock synchronization method according to any one of claims 11 to 13 is implemented.

29. A database server, comprising the clock synchronization apparatus according to claims 14 to 23 or the clock synchronization apparatus according to claims 24 to 26.

[FIG. 1]

[FIG. 2]

[FIG. 3]

EP 4 513 791 A1

[FIG. 4]

| Database server | | Clock server | | Clock source device |
|---|---|---|---|---|

S401: Send a synchronization message

S402: Send a delay request

S403: Send a delay response

S411: Send a detection message

S412: Obtain a first time interval based on one or more groups of second clock data

S413: Send the first time interval

S414: Receive the first time interval

S415: Update local time based on a first moment, local time of the database server, a second moment, and the first time interval

S401: Send a synchronization message

S402: Send a delay request

S403: Send a delay response

[FIG. 5]

[FIG. 6]

[FIG. 7]

Second clock source device

First clock source device

Clock server

$T_{sync1}^{c1}$    $T_{delay1}^{c1}$    $T_{sync1}^{c2}$    $T_{delay1}^{c2}$    $T_{sync2}^{c1}$    $T_{delay2}^{c1}$    $T_{sync2}^{c2}$    $T_{delay2}^{c2}$

S401   S402   S403

$T_{sync1}^{s1}$   $T_{delay1}^{s1}$   $T_{sync1}^{s2}$   $T_{delay1}^{s2}$   $T_{sync2}^{s1}$   $T_{delay2}^{s1}$   $T_{sync2}^{s2}$   $T_{delay2}^{s2}$

$T_s$

[FIG. 8]

Second clock server — $[T^{s2}_{CM\_L1}, T^{s2}_{CM\_U1}]$ — $[T^{s2}_{CM\_L2}, T^{s2}_{CM\_U2}]$

S411 S413

First clock server — $[T^{s1}_{CM\_L1}, T^{s1}_{CM\_U1}]$ — $[T^{s1}_{CM\_L2}, T^{s1}_{CM\_U2}]$

S411 S413 ▪▪▪▪

Database server

S411 S413 ▪▪▪▪

$T^{c1}_{send1}$ $T^{c1}_{recv1}$ $T^{c2}_{send1}$ $T^{c2}_{recv1}$ $T^{c1}_{send2}$ $T^{c1}_{recv2}$ $T^{c2}_{send2}$ $T^{c2}_{recv2}$ $T_c$

[FIG. 9]

[FIG. 10]

[FIG. 11]

[FIG. 12]

| Database server | Clock server | Clock source device |
| --- | --- | --- |

S501: Send a synchronization message

S502: Send a delay request

S503: Send a delay response

S511: Obtain a first time interval based on one or more groups of second clock data

S512: Send the first time interval

S513: Receive the first time interval

S515: Update local time based on a first moment, local time of the database server, a second moment, and the first time interval

S501: Send a synchronization message

S502: Send a delay request

S503: Send a delay response

[FIG. 13]

131 — Sending module

133 — Calculation module

132 — Receiving module

Clock synchronization apparatus

[FIG. 14]

142 — Calculation module

141 — Receiving module

Clock synchronization apparatus

## INTERNATIONAL SEARCH REPORT

| | International application No. |
|---|---|
| | **PCT/CN2023/094485** |

**A. CLASSIFICATION OF SUBJECT MATTER**

H04J3/06(2006.01)i

According to International Patent Classification (IPC) or to both national classification and IPC

**B. FIELDS SEARCHED**

Minimum documentation searched (classification system followed by classification symbols)

IPC:H04J,H04W

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT: 本地, 本地时间, 段, 范围, 区段, 区间, 时间, 时钟, 时钟服务器, 时钟源, 授时服务器, 授时源, 同步, ntp, ptp, range, server, sync, time

**C. DOCUMENTS CONSIDERED TO BE RELEVANT**

| Category* | Citation of document, with indication, where appropriate, of the relevant passages | Relevant to claim No. |
|---|---|---|
| A | CN 102457371 A (HUAWEI TECHNOLOGIES CO., LTD.) 16 May 2012 (2012-05-16) description, paragraphs [0071]-[0154], and figures 1-4-a | 1-29 |
| A | CN 107395307 A (RAISECOM TECHNOLOGY CO., LTD.) 24 November 2017 (2017-11-24) entire document | 1-29 |
| A | CN 111865466 A (RUNDIAN ENERGY SCIENCE AND TECHNOLOGY CO., LTD.) 30 October 2020 (2020-10-30) entire document | 1-29 |
| A | CN 115735387 A (QUALCOMM INC.) 03 March 2023 (2023-03-03) entire document | 1-29 |
| A | WO 2015049478 A1 (KHALIFA UNIVERSITY OF SCIENCE, TECHNOLOGY, AND RESSEARCH et al.) 09 April 2015 (2015-04-09) entire document | 1-29 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 July 2023** | **25 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/094485**

| Patent document cited in search report | | | Publication date (day/month/year) | Patent family member(s) | | | Publication date (day/month/year) |
|---|---|---|---|---|---|---|---|
| CN | 102457371 | A | 16 May 2012 | WO | 2012055360 | A1 | 03 May 2012 |
| CN | 107395307 | A | 24 November 2017 | | None | | |
| CN | 111865466 | A | 30 October 2020 | | None | | |
| CN | 115735387 | A | 03 March 2023 | US | 2023171720 | A1 | 01 June 2023 |
| | | | | EP | 4176639 | A1 | 10 May 2023 |
| | | | | WO | 2022005680 | A1 | 06 January 2022 |
| WO | 2015049478 | A1 | 09 April 2015 | EP | 3053286 | A1 | 10 August 2016 |

Form PCT/ISA/210 (patent family annex) (July 2022)

32

**REFERENCES CITED IN THE DESCRIPTION**

**Patent documents cited in the description**

- CN 202210569266